# EUROPÄISCHE PATENTSCHRIFT

(11) **EP 3 095 015 B1**
(45) Veröffentlichungstag und Bekanntmachung des Hinweises auf die Patenterteilung: **22.09.2021**
(21) Anmeldenummer: 14712228.7
(22) Anmeldetag: 12.03.2014
(51) Int. Cl.: G05B 15/02

(54) **VORRICHTUNG UND VERFAHREN ZUM BETRIEB EINER AUTOMATISIERUNGSANLAGE MIT REDUZIERTEM ENERGIEVERBRAUCH**
APPARATUS AND METHOD FOR OPERATING AN AUTOMATION PLANT WITH REDUCED ENERGY CONSUMPTION
DISPOSITIF ET PROCÉDÉ POUR FAIRE FONCTIONNER UNE INSTALLATION D'AUTOMATISATION AVEC UNE CONSOMMATION D'ÉNERGIE RÉDUITE

(43) Veröffentlichungstag der Anmeldung: 23.11.2016
(73) Patentinhaber: Siemens Aktiengesellschaft, 80333 München (DE)
(72) Erfinder: GRIMM, Stephan, 81825 München (DE); BEYER, Dagmar, 80339 München (DE); SEITZ, Christian, 90419 Nürnberg (DE)
(86) Internationale Anmeldenummer: PCT/EP2014/054784
(87) Internationale Veröffentlichungsnummer: WO 2015/135577

(56) Entgegenhaltungen:
- EP-A1- 2 192 457
- EP-A1- 2 244 142
- EP-A1- 2 455 827
- WO-A1-2013/044964
- WO-A1-2013/077191
- US-A- 6 098 118
- S. MECHS; J. P. MÜLLER; S. LAMPARTER; J. PESCHKE: "Networked priced timed automata for energy-efficient factory automation", AMERICAN CONTROL CONFERENCE, 2012, Seiten 5310-5317, XP002732109, in der Anmeldung erwähnt
- None

## Beschreibung

Die Erfindung betrifft eine Vorrichtung zum Betrieb einer Automatisierungsanlage sowie ein entsprechendes Verfahren.

Automatisierungsanlagen dienen dazu, vorbestimmte Verfahrensabläufe automatisiert über technische Einrichtungen durchzuführen. Häufig werden Automatisierungsanlagen zur industriellen Herstellung von Gütern bzw. Produkten genutzt. Ein weiteres Beispiel einer Automatisierungsanlage ist ein logistisches Verteilsystem.

Automatisierungsanlagen sind in der Regel komplex aufgebaut und umfassen eine Vielzahl von Teilsystemen. Dabei besteht das Problem, dass die Teilsysteme oftmals nicht energieeffizient betrieben werden. Insbesondere bleiben Teilsysteme oftmals im Betrieb, obwohl sie für die gerade durchgeführten Prozesse der Automatisierungsanlange nicht benötigt werden.

Aus dem Stand der Technik Ansätze bekannt, um Automatisierungsanlangen energiesparend zu betreiben. In der Druckschrift [1] ist eine Vorrichtung zum Reduzieren des Energieverbrauchs einer Anlage beschrieben, bei der die Anlage über ein Deaktivierungssignal in verschiedene Energiesparmodi gesetzt werden kann.

Die Druckschrift [2] beschreibt eine Vorrichtung zur energieeffizienten Steuerung einer Anlage. Mit Informationen aus übergeordneten Systemen, z.B. einem Produktplanungssystem, kann die Anlage in energiesparende Zustände gesetzt werden.

Das Dokument [3] offenbart ein Verfahren zur automatischen Erstellung von Einschaltsequenzen in einer industriellen Anlage mit möglichst geringer Gesamt-Energieaufnahme in der Anlage.

Die bekannten Verfahren zum energieeffizienten Betrieb von technischen Anlagen zeigen keine konkrete Umsetzung, wie der Energieverbrauch der Anlage unter Berücksichtigung der Wechselwirkung mit verschiedenen Steuersystemen geeignet angepasst werden kann.

Aufgabe der Erfindung ist es, eine Vorrichtung zum Betrieb einer Automatisierungsanlange zu schaffen, welche einfach und effizient den Energieverbrauch der Anlage steuert.

Diese Aufgabe wird durch die unabhängigen Ansprüche gelöst. Weiterbildungen der Erfindung sind in den abhängigen Ansprüchen definiert.

Die erfindungsgemäße Vorrichtung umfasst ein Automatisierungs-Steuersystem, das eine Prozess-Steuereinheit zur Steuerung der durch die Automatisierungsanlange durchgeführten Prozesse umfasst. Üblicherweise ist die Prozess-Steuereinheit eine speicherprogrammierbare Steuerung (auch als SPS-Steuerung bezeichnet). Die Prozess-Steuereinheit greift im Rahmen der Steuerung auf mehrere Gerätesteuereinheiten zu, die ebenfalls als speicherprogrammierbare Steuerung realisiert sein können. Eine jeweilige Gerätesteuereinheit ist einem Teilsystem der Automatisierungsanlange zugeordnet und steuert die zu diesem Teilsystem gehörigen Geräte. In einer bevorzugten Variante ist das Automatisierungs-Steuersystem zur Steuerung der Automatisierungsanlange auf der Steuerungsebene und/oder der Prozessleitebene gemäß der Automatisierungspyramide vorgesehen. Die Automatisierungspyramide ist dem Fachmann hinlänglich bekannt und beschreibt die verschiedenen Ebenen, in der Aufgaben durch die Automatisierungsanlange durchgeführt werden. Die Automatisierungspyramide setzt sich von unten nach oben aus der Sensor/Aktor-Ebene, der Feldebene, der Steuerungsebene, der Prozessleitebene, der Betriebsleitebene und der Unternehmensebene zusammen.

Die erfindungsgemäße Vorrichtung umfasst neben dem Automatisierungs-Steuersystem ein übergeordnetes Steuersystem, welches Zugriff auf das Automatisierungs-Steuersystem zur Beeinflussung des Betriebs der Automatisierungsanlange hat. Vorzugsweise ist dieses übergeordnete Steuersystem oberhalb der Prozessleitebene gemäß der Automatisierungspyramide vorgesehen, vorzugsweise in der Betriebsleitebene.

Die erfindungsgemäße Vorrichtung umfasst ferner ein Energie-Steuersystem zur Ermittlung und Ausführung von Schaltsequenzen, wobei das Energie-Steuersystem im Rahmen der Ausführung einer Schaltsequenz Schaltbefehle an das Automatisierungs-Steuersystem gibt, wodurch Geräte der Teilsysteme zumindest zeitweise in Betriebszustände mit reduziertem Energieverbrauch geschaltet werden. Das Schalten in Betriebszustände mit reduziertem Energieverbrauch erfolgt dabei ohne Beeinträchtigung des Betriebs der Automatisierungsanlange. Mit anderen Worten erfolgt das Schalten in Betriebszustände mit reduziertem Energieverbrauch derart, dass die aktuell laufenden Prozesse der Automatisierungsanlange weiterhin durchgeführt werden bzw. gerade ein Betriebsstopp der Anlage oder entsprechender Teile der Anlage vorliegt. Betriebszustände mit reduziertem Energieverbrauch sind insbesondere Standby-Zustände oder auch komplett ausgeschaltete Zustände von Geräten in der Automatisierungsanlage.

Die erfindungsgemäße Vorrichtung beinhaltet eine Schnittstelle zur Ausgabe von ersten Informationssignalen von der Prozess-Steuereinheit an das Energie-Steuersystem, wobei die ersten Informationssignale ein oder mehrere Teilsysteme und/oder Geräte davon (d.h. zumindest ein Gerät) spezifizieren, die von den durch die Automatisierungsanlage durchgeführten Prozessen zumindest zeitweise nicht benötigt werden, d.h. welche in einem oder mehreren (durch die Prozesse) bestimmten Zeiträumen (aktuell und/oder zukünftig) nicht benötigt werden.

Darüber hinaus beinhaltet die Vorrichtung eine Schnittstelle zur Ausgabe von zweiten Informationssignalen von dem übergeordneten Steuersystem an das Energie-Steuersystem, wobei die zweiten Informationssignale zumindest einen anstehenden Betriebsstopps (d.h. einen aktuellen oder zukünftigen Betriebsstopp) von einem oder mehreren Teilsystemen und/oder Geräten davon (d.h. zumindest einem Gerät) spezifizieren. Insbesondere spezifizieren die zweiten Informationssignale dabei einen anstehenden Betriebsstopp der gesamten Automatisierungsanlange. Das Energie-Steuersystem der erfindungsgemäßen Vorrichtung ist derart ausgestaltet, dass es die Schaltsequenzen in Abhängigkeit von den ersten und zweiten Informationssignalen berechnet und ausführt.

Die erfindungsgemäße Vorrichtung zeichnet sich durch eine umfassende Regelung des Energieverbrauchs einer Automatisierungsanlange sowohl unter Berücksichtigung eines übergeordneten Steuersystems als auch des Automatisierungs-Steuersystems aus. Dabei werden die laufenden Prozesse der Automatisierungsanlange und die von einem übergeordneten Steuersystem stammenden Informationen zu Betriebsstopps in Betracht gezogen. Unter dem Begriff des Betriebsstopps ist dabei eine Zeitspanne zu verstehen, in der die Automatisierungsanlange ihre Automatisierungsaufgaben nicht erfüllt, d.h. eine Zeitspanne, in der die Automatisierungsanlange nicht produktiv arbeitet.

In einer besonders bevorzugten Ausführungsform ist das übergeordnete Steuersystem ein Betriebsplanungssystem, insbesondere ein Produktionsleitsystem, das auch als MES-System (MES = Manufacturing Execution System) bezeichnet wird. Ein solches Produktionsleitsystem ist der Betriebsleitebene der Automatisierungspyramide zugeordnet. Das Betriebsplanungssystem ist dabei derart ausgestaltet, dass es den zeitlichen Betriebsablauf der Automatisierungsanlange erstellt und in diesem zeitlichen Betriebsablauf enthaltene Betriebsstopps bestimmt. Mit dieser Variante der Erfindung kann auf einfache Weise ein bestehendes Betriebsplanungssystem in die Steuerung des Energieverbrauchs der Automatisierungsanlange eingebunden werden.

Das Betriebsplanungssystem umfasst vorzugsweise eine separate Erstellungs-Logik zur Erstellung des zeitlichen Betriebsablaufs und eine separate Bestimmungs-Logik zur Bestimmung der in diesem zeitlichen Betriebsablauf enthaltenen Betriebsstopps, wobei die Bestimmungs-Logik zur Bestimmung der Betriebsstopps auf die Erstellungs-Logik zugreift.

In einer weiteren Ausgestaltung der erfindungsgemäßen Vorrichtung ist das Energie-Steuersystem derart ausgestaltet, dass es die Schaltsequenzen basierend auf einem Energiezustandsmodell ermittelt, gemäß dem die Geräte der Teilsysteme basierend auf dem Kriterium eines möglichst niedrigen Energieverbrauchs eines oder mehrerer Teile der Automatisierungsanlange und insbesondere der gesamten Automatisierungsanlange und/oder dem Kriterium eines geringen Verschleißes eines oder mehrerer Teile der Automatisierungsanlange in Betriebszustände mit reduziertem Energieverbrauch geschaltet werden. Unter Teilen der Automatisierungsanlange können dabei einzelne Geräte bzw. Kombinationen von mehreren Geräten und ggf. auch Teilsysteme verstanden werden.

In einer weiteren bevorzugten Ausführungsform der erfindungsgemäßen Vorrichtung ist eine gemeinsame Schnittstelle für das übergeordnete Steuersystem und die Prozess-Steuereinheit vorgesehen, um hierüber die ersten und zweiten Informationssignale an das Energie-Steuersystem auszugeben. Hierdurch wird eine einfache Übergabe von ersten und zweiten Informationen an das Energie-Steuersystem geschaffen.

In einer weiteren Ausgestaltung der erfindungsgemäßen Vorrichtung weist das Energie-Steuersystem eine separate Berechnungs-Logik zur Berechnung von Schaltsequenzen und eine separate Ausführungs-Logik zur Ausführung der Schaltsequenzen auf, wobei die Berechnungs-Logik zur Initialisierung der Ausführung einer berechneten Schaltsequenz auf die Ausführungs-Logik zugreift.

In einer weiteren Ausgestaltung ist in dem Automatisierungs-Steuersystem für jedes Teilsystem eine Schaltsteuereinheit vorgesehen, welche Schaltbefehle des Energie-Steuersystems in durch die Gerätesteuereinheit des jeweiligen Teilsystems verarbeitbare Befehle umsetzt. Hierdurch kann eine generische Anbindung des Energie-Steuersystems an das Automatisierungs-Steuersystem erreicht werden.

In einer weiteren bevorzugten Ausführungsform ist die erfindungsgemäße Vorrichtung zum Betrieb einer Automatisierungsanlange in der Form einer Anlage zur Herstellung von Gütern oder Produkten oder in der Form einer logistischen Verteilanlage vorgesehen.

Die Erfindung betrifft darüber hinaus eine Automatisierungsanlange, welche die oben beschriebene erfindungsgemäße Vorrichtung bzw. eine oder mehrere bevorzugte Varianten dieser Vorrichtung umfasst.

Die Erfindung betrifft ferner ein Verfahren zum Betrieb einer Automatisierungsanlange bei dem:
- eine Prozess-Steuereinheit in einem Automatisierungs-Steuersystem auf mehrere Gerätesteuereinheiten zugreift, wobei eine jeweilige Gerätesteuereinheit einem jeweiligen Teilsystem der Automatisierungsanlage zugeordnet ist und zu dem Teilsystem gehörige Geräte steuert;
- ein übergeordnetes Steuersystem auf das Automatisierungs-Steuersystem zur Beeinflussung des Betriebs der Automatisierungsanlage zugreift;
- ein Energie-Steuersystem Schaltsequenzen ermittelt und ausführt, wobei das Energie-Steuersystem im Rahmen der Ausführung einer Schaltsequenz Schaltbefehle an das Automatisierungs-Steuersystem gibt, wodurch Geräte der Teilsysteme zumindest zeitweise in Betriebszustände mit reduziertem Energieverbrauch geschaltet werden;
- erste Informationssignale über eine Schnittstelle von der Prozess-Steuereinheit an das Energie-Steuersystem ausgegeben werden, wobei die ersten Informationssignale ein oder mehrere Teilsysteme und/oder Geräte davon spezifizieren, die von den durch die Automatisierungsanlage durchgeführten Prozessen zumindest zeitweise nicht benötigt werden;
- zweite Informationssignale über eine Schnittstelle von dem übergeordneten Steuersystem an das Energie-Steuersystem ausgegeben werden, wobei die zweiten Informationssignale zumindest einen anstehenden Betriebstopp von einem oder mehreren Teilsystemen und/oder Geräten davon spezifizieren;
- das Energie-Steuersystem die Schaltsequenzen basierend auf den ersten und zweiten Informationssignalen berechnet und ausführt.

Das erfindungsgemäße Verfahren ist vorzugsweise derart ausgestaltet, dass die Automatisierungsanlage mit der erfindungsgemäßen Vorrichtung bzw. einer oder mehrerer bevorzugter Varianten der erfindungsgemäßen Vorrichtung betrieben wird. Entsprechende Merkmale der Vorrichtung sind dabei als korrespondierende Verfahrensmerkmale in dem Betriebsverfahren realisiert.

Ausführungsbeispiele der Erfindung werden nachfolgend anhand der beigefügten Figuren detailliert beschrieben.

Es zeigen:
- Fig. 1: eine schematische Darstellung der Architektur einer Ausführungsform der erfindungsgemäßen Vorrichtung zum Betrieb einer Automatisierungsanlage;
- Fig. 2: ein Zeitdiagramm, welches die Kommunikation zwischen den Komponenten der Architektur der Fig. 1 wiedergibt;
- Fig. 3: ein Beispiel einer Automatisierungsanlage, welche basierend auf einer Ausführungsform der erfindungsgemäßen Vorrichtung betrieben wird; und
- Fig. 4: ein Zeitdiagramm, welches einen Betriebsablauf der Anlage aus Fig. 3 wiedergibt.

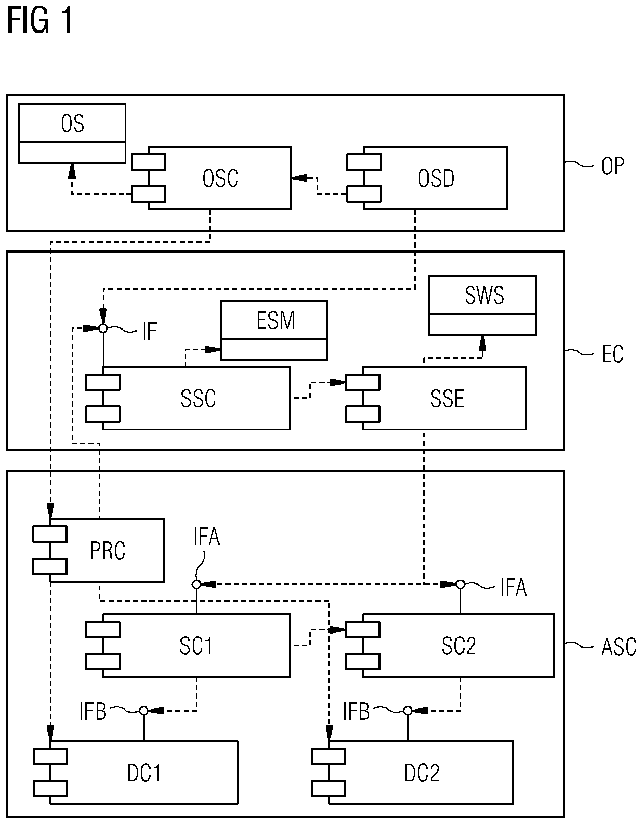

Nachfolgend wird anhand von Fig. 1 die Architektur einer Ausführungsform einer erfindungsgemäßen Vorrichtung beschrieben. Gemäß dieser Architektur wird die Steuerlogik der Automatisierungsanlage mit Komponenten eines Energiesteuer-Systems gekoppelt, welches in Bezug auf einzelne Teilsysteme der Automatisierungsanlage das Schalten in Zustände mit reduziertem Energieverbrauch steuert. Zustände mit reduziertem Energieverbrauch können je nach Ausgestaltung der Automatisierungsanlage verschieden definiert sein. Insbesondere umfassen Zustände mit reduziertem Energieverbrauch Standby-Zustände sowie ausgeschaltete Zustände entsprechender Geräte auf der Ebene eines Teilsystems der Automatisierungsanlage.

In der nachfolgend beschriebenen Architektur wird auch eine Kopplung der Steuerung der Automatisierungsanlage zu einem übergeordneten Planungssystem des Betriebs der Automatisierungsanlage geschaffen. Bei diesem Planungssystem handelt es sich um ein sog. MES-System (MES = Manufacturing Execution System), welches auch als Produktionsleitsystem bezeichnet wird.

Basierend auf der in Fig. 1 gezeigten Architektur werden Schnittstellen zwischen den verschiedenen Komponenten beschrieben. Die Schnittstellen bestimmen die Kommunikation zwischen den Komponenten, welche für ein automatisiertes energiesparendes Schalten auf der Ebene der Teilsysteme erforderlich ist. Darüber hinaus wird ein Protokoll spezifiziert, welches die Wechselwirkung der Komponenten in Bezug auf die Schnittstellen beschreibt.

In Fig. 1 ist die Architektur in der Form eines an sich bekannten UML-Komponenten-Diagramms wiedergegeben. Dabei ist durch gestrichelte Pfeile der Zugriff einer Komponente (spezifiziert durch den Anfang des Pfeils) auf eine andere Komponente (spezifiziert durch das Ende des Pfeils) wiedergegeben. Die dargestellte Architektur umfasst ein Automatisierungs-Steuersystem ASC (ASC = Automation System Control). Dieses Steuersystem beinhaltet in an sich bekannter Weise eine Prozess-Steuereinheit (z.B. eine SPS-Steuerung), welche wiederum einzelne Gerätesteuereinheiten von Teilsystemen der Automatisierungsanlage steuert. In Fig. 1 sind beispielhaft zwei Gerätesteuereinheiten DC1 und DC2 wiedergegeben, wobei in der Regel eine wesentlich größere Anzahl von Gerätesteuereinheiten vorgesehen ist. Jede dieser Gerätesteuereinheiten steuert entsprechende Geräte im betrachteten Teilsystem. Die Geräte stellen u.a. Sensoren und Aktoren in der Automatisierungsanlage dar.

Bei dem Automatisierungs-Steuersystem ASC handelt es sich in der hier beschriebenen Ausführungsform um ein Steuersystem auf der Prozessleitebene und der Steuerungsebene gemäß der Automatisierungspyramide. Das Automatisierungs-Steuersystem umfasst den jeweiligen Gerätesteuereinheiten DC1 und DC2 zugeordnete Schaltsteuereinheiten SC1 und SC2, die über Schnittstellen IFA an ein Energie-Steuersystem EC (EC = Energy Controller) und über Schnittstellen IFB an die Gerätesteuereinheiten DC1 bzw. DC2 angebunden sind. Wie weiter unten näher erläutert, wird über das Schaltsteuereinheiten eine Umsetzung bzw. Wandlung von Kommandos des Energie-Steuersystems in Befehle erreicht, welche von den einzelnen Gerätesteuereinheiten DC1 bzw. DC2 verarbeitet werden können.

Die Architektur der Fig. 1 umfasst ferner ein Betriebsplanungssystem OP (OP = Operation Planning), das ein der eigentlichen Automatisierungs-Steuerung übergeordnetes Steuersystem ist und auf der Betriebsleitebene gemäß der Automatisierungspyramide liegt. Dieses Betriebsplanungssystem umfasst eine Logik OSC zur Erstellung des Betriebsablaufs der Automatisierungsanlage, die auf das Datenobjekt OS (OS = Operation Schedule) zugreift, das den zeitlichen Betriebsablauf spezifiziert. Auf die Logik OSC greift die Logik OSD zur Bestimmung bzw. Detektion von Betriebsstopps zu. Die Logik OSD bestimmt unter Verwendung des erstellten Betriebsablaufs, in welchen Zeitabschnitten die gesamte Automatisierungsanlage abgeschaltet werden kann.

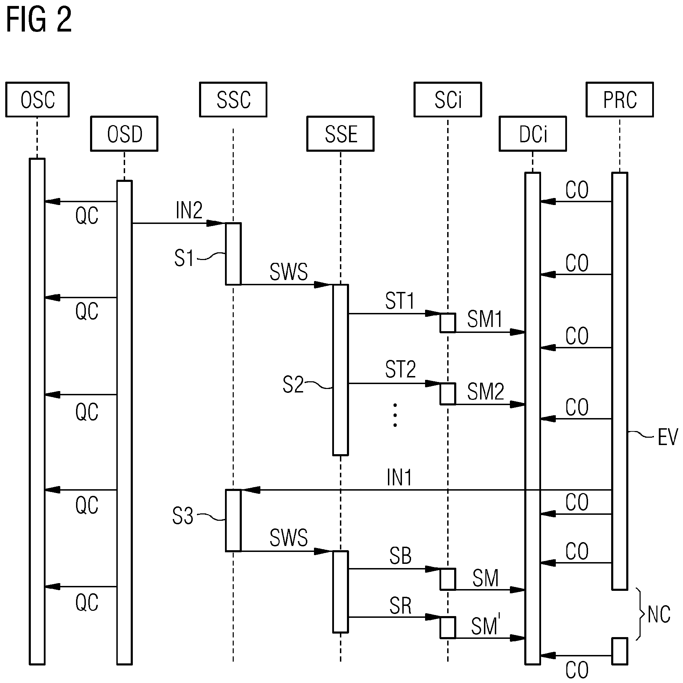

Das bereits erwähnte Energie-Steuersystem EC empfängt über eine Schnittstelle IF erste Informationssignale IN1 von der Prozess-Steuereinheit PRC und zweite Informationssignale IN2 von der Logik OSD. Die Informationssignale IN1 und IN2 sind in dem Zeitdiagramm der Fig. 2 gezeigt. Die ersten Informationssignale enthalten Informationen im Hinblick auf Teilsysteme bzw. Geräte davon, die aktuell von den durch die Automatisierungsanlage durchgeführten Prozessen nicht benötigt werden und deshalb abgeschaltet bzw. in einen Energiesparmodus gesetzt werden können. Demgegenüber betreffen die zweiten Informationssignale Informationen zu anstehenden Betriebsstopps der Anlage, die über die Logik OSD mittels eines Zugriffs auf die Logik OSC detektiert wurden. Beide Informationen werden über die Schnittstelle IF an eine Logik SSC gegeben, welche Schaltsequenzen SWS berechnet. Die Schaltsequenzen spezifizieren unter Berücksichtigung der Informationssignale IN1 und IN2, wann entsprechende Geräte von Teilsystemen bzw. ganze Teilsysteme bzw. die gesamte Automatisierungsanlage in Zustände mit reduziertem Energiebedarf geschaltet werden können, ohne dass hierdurch der Betrieb der Automatisierungsanlage beeinträchtigt wird.

In der hier beschriebenen Ausführungsform greift die Logik SSC auf ein Energiezustandsmodell ESM zu, gemäß dem die Schaltsequenzen SWS derart festgelegt werden, dass der Energieverbrauch der gesamten Automatisierungsanlage möglichst gering ist. Die Art der Berechnung entsprechender Schaltsequenzen mit einem solchen Energiezustandsmodell ist an sich bekannt. Beispielhaft wird hierbei auf die Verfahren der Dokumente [4], [5] und [6] verwiesen. Die Logik SSC wechselwirkt ferner mit der Logik SSE, welche die Ausführung der berechneten Schaltsequenzen durchführt und hierfür auf das Datenobjekt SWS der Schaltsequenzen zugreift.

Im Folgenden werden die in Fig. 1 gezeigten Komponenten sowie die Schnittstellen nochmals detailliert erläutert:

### Logik OSC zur Erstellung des Betriebsablaufs:

Diese Komponente ist an sich bekannt und Teil des Betriebsplanungssystems OP. Sie stellt eine Verwaltungsfunktionalität zur Erstellung des Ablaufs der Operationen der Automatisierungsanlage bereit. Zu diesem Zweck greift sie auf das Datenobjekt OS zu.

### Logik OSD zur Bestimmung von Betriebsstopps:

Diese Komponente, die sich innerhalb des Betriebsplanungssystems OP befindet, stellt eine Funktionalität bereit, gemäß der Produktionsstopps der Automatisierungsanlage bzw. von Teilen davon aus dem zeitlichen Betriebsablauf der Automatisierungsanlage abgeleitet werden. Hierzu greift die Logik OSD auf die Logik OSC zu, welche den zeitlichen Betriebsablauf erstellt.

### Logik SSC zur Berechnung von Schaltsequenzen:

Diese Komponente stellt die Funktionalität der Berechnung von energieeffizienten Schaltsequenzen basierend auf Informationen von der Logik OSD und der Prozess-Steuereinheit PRC bereit. Die Basis für die durchgeführten Berechnungen ist das Energiezustandsmodell ESM der Automatisierungsanlage und seiner Teilsysteme. Die Logik SSC greift auf die Logik SSE zur Ausführung von Schaltsequenzen zu, um die Ausführung der berechneten Schaltsequenzen zu veranlassen. Im Rahmen der Ausführung der Schaltsequenzen gibt die Logik SSE entsprechende Befehle an das Automatisierungs-Steuersystem ASC, welches diese Befehle über die jeweiligen Schnittstellen IFA zu den Schaltsteuereinheiten SC1 bzw. SC2 weiterleitet, welche die Befehle wiederum in Kommandos für die Gerätesteuereinheiten DC1 bzw. DC2 wandeln. Diese Kommandos werden über die Schnittstelle IFB an diese Gerätesteuereinheiten ausgegeben.

### Logik SSE zur Ausführung von Schaltsequenzen:

Wie bereits erwähnt, führt diese Komponente Schaltsequenzen durch die Übergabe von Schaltkommandos an das Automatisierungs-Steuersystem ASC aus. Dabei wird die aktuell ausgeführte Schaltsequenz zu jedem Zeitpunkt nachverfolgt. Die Komponente SSE greift auf die Schaltsteuereinheiten SC1 bzw. SC2 zu, die in dem Automatisierungs-Steuersystem ASC vorgesehen sind und das gleichzeitige Schalten von verschiedenen Teilsystemen der Automatisierungsanlage ermöglichen.

### Prozess-Steuereinheit PRC:

Diese Komponente ist ein Teil des Automatisierungs-Steuersystems ASC und hat die Funktionalität der Steuerung der durch die Automatisierungsanlage durchgeführten Prozesse. Hierfür greift sie in an sich bekannter Weise auf verschiedene Gerätesteuereinheiten DC1 bzw. DC2 zu, welche zur Steuerung verschiedener Teilsysteme der Automatisierungsanlage verantwortlich sind. Zusätzlich greift die Prozess-Steuereinheit PRC über die Schnittstelle IF auf die Logik SSC zur Berechnung von Schaltsequenzen zu, um die entsprechenden ersten Informationssignale betreffend Geräte zu kommunizieren, die aktuell nicht in den von der Automatisierungsanlage durchgeführten Prozessen benötigt werden.

### Gerätesteuereinheit DC1 bzw. DC2:

Diese Komponente steuert direkt ein bestimmtes Teilsystem der Automatisierungsanlage.

### Schaltsteuereinheit SC1 bzw. SC2:

Diese Komponente ist oberhalb jeder Gerätesteuereinheit als eine Kommunikationsschicht zum Energie-Steuersystem EC angeordnet. Die Komponente empfängt Schaltbefehle von der Logik SSE zur Ausführung der Schaltsequenzen und gibt diese nach entsprechender Wandlung an die Teilsysteme der Automatisierungsanlage.

### Schnittstelle IF:

Diese Schnittstelle wird nachfolgend als "ActivationScheduling" bezeichnet und ist durch folgendes UML-Klassendiagramm spezifiziert:

| <<interface>> |
|---|
| **ActivationScheduling** |
| +scheduleSystemActivation() |
| +scheduleSubsystemActivation() |
| +scheduleSystemDeactivation() |
| +scheduleSubsystemDeactivation() |

Über die Funktionen scheduleSystemActivation() bzw. scheduleSystemDeactivation() kann die gesamte Automatisierungsanlage aktiviert bzw. deaktiviert werden. Über die Funktionen scheduleSubsystemActivation() bzw. scheduleSubsystemDeactivation() können Teilsysteme der Automatisierungsanlage aktiviert bzw. deaktiviert werden. Die Schnittstelle IF ermöglicht die Kommunikation zwischen der Logik OSC zur Bestimmung von Betriebsstopps bzw. der Prozess-Steuereinheit PRC mit der Logik SSC zur Berechnung von Schaltsequenzen.

### Schnittstelle IFA:

Die Schnittstelle IFA wird nachfolgend als "StateSwitching" bezeichnet und ist durch folgendes UML-Klassendiagramm spezifiziert:

| <<interface>> |
|---|
| **StateSwitching** |
| +switchToState() |
| +requestCurrentState() |

Über die Funktion switchToState() wird ein entsprechender Schaltbefehl an die Schaltsteuereinheit SC1 bzw. SC2 gegeben. Über die Funktion requestCurrentState() wird von der entsprechenden Schaltsteuereinheit die Information über den aktuellen Schaltzustand angefordert. Diese Schnittstelle ermöglicht die Kommunikation zwischen den einzelnen Schaltsteuereinheiten, die in den verschiedenen Teilsystemen installiert sind, und der Logik SSE zur Ausführung der Schaltsequenzen. Der Hauptzweck dieser Schnittstelle ist das Schalten von Teilsystemen in bestimmte Zustände. Da Fehler beim Schalten auftreten können, kann der aktuelle Schaltzustand der Teilsysteme abgefragt werden.

### Schnittstelle IFB:

Diese Schnittstelle wird nachfolgend als DeviceModeControlling bezeichnet und ist durch folgendes UML-Klassendiagramm spezifiziert:

| <<interface>> |
|---|
| **DeviceModeControlling** |
| +setDeviceMode() |
| +getDeviceMode() |

Über die Funktion setDeviceMode() werden Zustände von Geräten des entsprechenden Teilsystems eingestellt. Ferner kann der aktuelle Zustand von Geräten des Teilsystems über den Befehl getDeviceMode() abgerufen werden. Die Schnittstelle ermöglicht die Kommunikation zwischen den Schaltsteuereinheiten SC1 bzw. SC2 und den diesen Schaltsteuereinheiten zugeordneten Gerätesteuereinheiten DC1 bzw. DC2.

Nachfolgend wird anhand von Fig. 2 der Zeitablauf eines Kommunikationsprotokolls zum Informationsaustausch in der Architektur der Fig. 1 beschrieben. In dem Diagramm der Fig. 2 schreitet die Zeit in vertikaler Richtung von oben nach unten fort, wobei Zeitspannen der Aktivität entsprechender Komponenten durch vertikalen Balken angedeutet sind. Die Übergabe von Informationen zwischen einzelnen Komponenten ist durch horizontal verlaufende Pfeile angedeutet.

Wie sich aus Fig. 2 ergibt, fragt die Komponente OSD über entsprechende Befehle QC (QC = Query Schedule) in regelmäßigen Zeitabständen von der Komponente OSC den erstellten zeitlichen Ablauf des Betriebs der Automatisierungsanlage ab. Die Komponente OSD ermittelt dabei die oben beschriebenen zweiten Informationssignale IN2, die an die Komponente SSC gegeben werden. Die Informationen IN2 spezifizieren einen Betriebsstopp der gesamten Automatisierungsanlage. Die Komponente SSC berechnet dann die entsprechende Schaltsequenz SWS unter Berücksichtigung der zweiten Informationssignale, was durch den Schritt S1 spezifiziert ist. Als Konsequenz werden alle Teilsysteme der Automatisierungsanlage mit entsprechenden Schaltbefehlen ST1, ST2, ..., usw. abgeschaltet, wie durch den Schritt S2 angedeutet ist. Die Schaltbefehle werden an die entsprechenden Schaltsteuereinheiten SCi gegeben, welche diese in Kommandos SM1 bzw. SM2 für die Gerätesteuereinheiten DCi (i = 1, 2) wandeln.

Gemäß Fig. 2 gibt die Prozess-Steuereinheit PRC des Automatisierungs-Steuersystems ASC in regelmäßigen Abständen Kommandos CO an die einzelnen Gerätesteuereinheiten DCi, um diese entsprechend zu steuern. Schließlich tritt das Ereignis EV auf, welches anzeigt, dass ein Teilsystem aktuell in den durch die Automatisierungsanlage durchgeführten Prozessen nicht benötigt wird. Als Konsequenz wird ein entsprechendes erstes Informationssignal IN1, welche das nicht benötigte Teilsystem spezifiziert, an die Komponente SSC gegeben. Gemäß Schritt S3 wird dann über eine zweite Schaltsequenz SWS das nicht benötigte Teilsystem abgeschaltet. Dabei werden innerhalb der Schaltsequenz entsprechende Befehle an die Gerätesteuereinheit des Teilsystems gegeben, das abgeschaltet werden soll. Dies wird durch den Befehl SB erreicht, der an die Schaltsteuereinheit SCi des Teilsystems gegeben wird und spezifiziert, dass das gesamte Teilsystem in den Standby-Modus gesetzt werden kann. Die Schaltsteuereinheit SCi wandelt diesen Befehl dann in den Befehl SM, der an die entsprechende Gerätesteuereinheit DCi gegeben wird und dort das Deaktivieren des Teilsystems veranlasst.

Sobald das Teilsystem im Rahmen der durch die Automatisierungsanlage durchgeführten Prozesse wieder benötigt wird, wird es über die Befehle SR und SM' wieder in den Bereitschaftszustand geschaltet. Der Befehl SR wird an die Schaltsteuereinheit SCi gegeben, die diesen Befehl in den Befehl SM' zum Aktivieren der entsprechenden Gerätesteuereinheit DCi wandelt. In Fig. 2 ist ferner die Zeitspanne NC zwischen den Befehlen SM und SM' angedeutet. Innerhalb dieser Zeitspanne ist das nicht benötigte Teilsystem abgeschaltet und kann nicht über die Prozess-Steuereinheit PRC gesteuert werden.

Die im Vorangegangenen beschriebene Ausführungsform der Erfindung weist eine Reihe von Vorteilen auf. Insbesondere wird eine Trennung einer energieeffizienten Steuerung der Komponenten einer Automatisierungsanlage von der eigentlichen Prozesssteuerung erreicht. Dabei fungiert das Energie-Steuersystem als eine Abstraktionsschicht zum Aktivieren bzw. Deaktivieren von Teilsystemen. Auf diese Weise wird die Programmierung eines energiesparenden Verhaltens der Automatisierungsanlage erleichtert, da das Energie-Steuersystem als separate Einheit konfiguriert ist und nicht Teil eines SPS-Programms innerhalb des Automatisierungs-Steuersystems ist. Der Programmierer einer SPS-Steuerung für das Automatisierungs-Steuersystem braucht somit nur geeignete Schnittstellen zum Energie-Steuersystem zu implementieren. Die Aktivierung und Deaktivierung entsprechender Geräte wird separat über das Energie-Steuersystem durchgeführt. Auf diese Weise wird es einfacher, Änderungen an der Steuerung durchzuführen bzw. Fehlfunktionen zu ermitteln, denn es ist eine gut strukturierte Interaktion zwischen den Komponenten in dem System definiert.

Mit der oben beschriebenen Architektur werden alle Schaltaktivitäten in Bezug auf das energiesparende Verhalten der Automatisierungsanlage in ein separates Energie-Steuersystem ausgelagert und müssen somit nicht in einem Steuerprogramm des Automatisierungs-Steuersystems integriert sein. Auf diese Weise wird das Programm des Automatisierungs-Steuersystems weniger komplex. Das Energie-Steuersystem kann ferner auf einem anderen Rechner als die Prozess-Steuereinheit ausgeführt werden. Dieser Rechner ist nur lose über eine entsprechende Schnittstelle an die Prozess-Steuereinheit gekoppelt.

Die obige Architektur ermöglicht durch die Verarbeitung von Informationen über die durch die Automatisierungsanlage durchgeführten Prozessen (erste Informationssignale) ein Abschalten von Teilsystemen der Automatisierungsanlage, welche aktuell nicht benötigt werden. Auf diese Weise wird Energie eingespart, ohne dass die Produktivität der Anlage eingeschränkt wird.

Die Architektur der Fig. 1 stellt Mechanismen zur Deaktivierung der Anlage aus zwei Richtungen bereit. Zum einen kann die Anlage über ein Betriebsplanungssystem als Ganzes abgeschaltet werden. Zum anderen können Teilsysteme im laufenden Betrieb der Automatisierungsanlage abgeschaltet werden, z.B. unter Berücksichtigung entsprechender Signale im Automatisierungsprozess, die anzeigen, dass bestimmte Geräte bzw. Teilsysteme nicht benötigt werden.

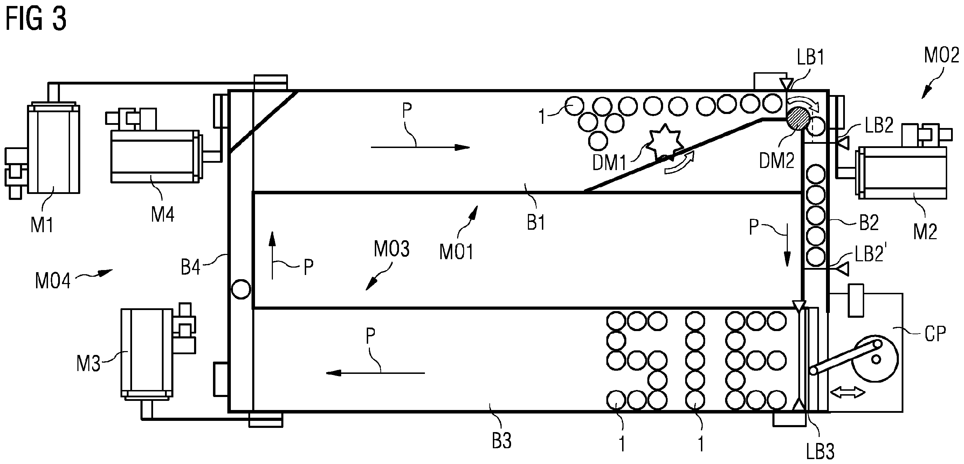

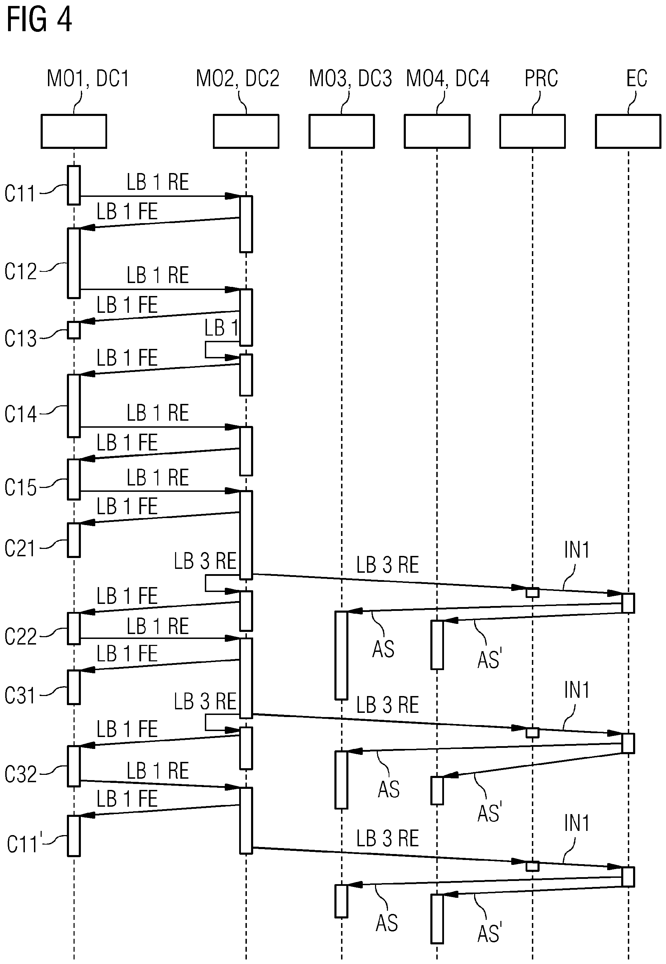

Nachfolgend wird anhand von Fig. 3 und Fig. 4 eine Ausführungsform einer Automatisierungsanlage erläutert, deren Betrieb basierend auf der im Vorangegangenen beschriebenen Architektur erfolgt. Der Automatisierungsanlage stellt dabei einen Prototypen dar, der aus den vier Modulen MO1, MO2, MO3 und MO4 besteht. Ein Modul stellt ein Teilsystem der Automatisierungsanlage dar. Die Anlage mit den einzelnen Modulen ist in Fig. 3 in Draufsicht von oben gezeigt.

Die Module MO1, MO2, MO3 bzw. MO4 umfassen jeweils ein Transportband B1, B2, B3 bzw. B4, wobei die Transportrichtungen der Bänder durch entsprechende Pfeile P angedeutet sind. Jedes Modul verfügt über einen Elektromotor zum Antrieb seines Transportbands. Das Transportband B1 wird über den Motor M1, das Transportband B2 über den Motor M2, das Transportband B3 über den Motor M3 und das Transportband B4 über den Motor M4 angetrieben. Jedes Modul umfasst auch ein Leistungsmodul zur Zufuhr von elektrischer Leistung sowie einen entsprechenden Inverter zur Stromwandlung zum Betrieb der elektrischen Komponenten des Moduls. Die Leistungsmodule und Inverter sind nicht aus Fig. 3 ersichtlich. Darüber hinaus sind in der Anlage verschiedene Sensoren vorgesehen. In Fig. 3 sind hierbei die Lichtschranken LB1, LB2, LB2' und LB3 angedeutet. Die Anlage wird über eine SPS-Steuerung gesteuert. Ferner sind Energiemessgeräte zum Messen des Energieverbrauchs aller Module vorgesehen. Die Kommunikation mit einem Benutzer erfolgt über eine MMI-Schnittstelle in der Form eines Bildschirms (nicht gezeigt).

Die in Fig. 3 gezeigte Anlage dient dazu, runde Plastikchips über die einzelnen Transportbänder derart zu transportieren, dass sich auf dem Transportband B3 über die Anordnung der Chips ein Schriftzug ergibt, wobei in dem Szenario der Fig. 3 gerade die Buchstaben "SIE" wiedergegeben werden. Die einzelnen Chips sind in Fig. 3 als weiße Kreise angedeutet und aus Übersichtlichkeitsgründen nur zum Teil mit dem Bezugszeichen 1 versehen.

Im Folgenden wird der Aufbau der einzelnen Module MO1 bis MO4 näher beschrieben. Das Modul MO1 umfasst das Transportband B1 mit zugehörigem Motor M1 sowie einen weiteren Motor DM1, der den Transport der Chips hin zu einem sich verengenden Bereich am Ende des Bands B1 unterstützt. Von dem Modul MO1 gelangen die Chips über den sich verengenden Bereich zu dem Modul MO2.

Das Modul MO2 umfasst das Transportband B2 mit zugeordnetem Motor M2 sowie den weiteren Motor DM2 und einen Spalten-Verschiebemechanismus CP. Der Motor DM2 transportiert die Chips von dem Transportband B1 auf das Transportband B2. Die Übergabe der Chips erfolgt dabei derart, dass sich auf dem Transportband B2 jeweilige Spalten aus Chips für einen zu generierenden Buchstaben bilden. Die entsprechende Spalte aus Chips wird über den Spalten-Verschiebemechanismus CP des Moduls MO2 an das Transportband B3 des Moduls MO3 übergeben.

Das Modul MO3 umfasst das Transportband B3 mit zugeordnetem Motor M3 und dient dazu, die Buchstaben, welche über die entsprechenden Spalten von Chips erzeugt werden, über das Transportband B3 von rechts nach links zu bewegen. Das Modul MO3 hat die folgenden drei Energiezustände:
- Standby: das Leistungsmodul ist aktiv, der Inverter und der Motor sind inaktiv;
- Bereitschaft: das Leistungsmodul und der Inverter sind aktiv, der Motor ist inaktiv;
- Produktion: das Leistungsmodul, der Inverter und der Motor sind aktiv.

Das Modul MO4 umfasst das Transportband B4 mit zugeordnetem Motor M4. Dieses Modul dient dazu, die Chips von dem Transportband B3 aufzunehmen und zurück zu dem Transportband B1 zu bewegen. Zusätzlich zu den Energiezuständen des Moduls MO3 kann das Modul MO4 auch komplett abgeschaltet werden, d.h. es umfasst folgenden Energiezustand:
- Abgeschaltet: das Leistungsmodul, der Inverter und der Motor sind inaktiv.

Zur Steuerung der Anlage der Fig. 3 basierend auf der Architektur der Fig. 1 sind eine Prozess-Steuereinheit PRC sowie vier separate Gerätesteuereinheiten DC1, DC2, DC3 und DC4 mit zugeordneten Schaltsteuereinheiten für die jeweiligen Module MO1, MO2, MO3 und MO4 vorgesehen. Darüber hinaus ist entsprechend der Fig. 1 ein Energie-Steuersystem EC über eine SPS-Software implementiert.

Das Energie-Steuersystem EC ist über eine OPC-Kommunikation mit der Automatisierungs-Steuersystem ASC der Automatisierungsanlage verbunden. Das Energie-Steuersystem beinhaltet die anhand von Fig. 1 beschriebenen Funktionalitäten der Berechnung und Ausführung von energieeffizienten Schaltsequenzen. Die Berechnung dieser Schaltsequenzen erfolgt basierend auf einem Energiezustandsmodell, welches in den eingangs erwähnten Druckschriften [4] bis [6] erläutert ist.

Für die Anlage der Fig. 3 ist ferner ein Betriebsplanungssystem OP vorgesehen, das den zeitlichen Ablauf der Operationen der Anlage zur Erzeugung entsprechender Buchstaben regelt. Der Betriebsablauf ist dabei in einzelne Jobs eingeteilt, wobei sich jeder Job auf die Erzeugung eines Wortes auf dem Transportband B3 bezieht.

Ein Beispiel eines Betriebsablaufs aus fünf Jobs mit entsprechenden Jobnummern ist in nachfolgender Tabelle gezeigt:

| JobNr. | Text | Anzahl von Chips pro Spalte | Produkti onsstart (Uhrzeit ) | Dauer des Produktionsprozes ses [min] | Dauer der Produktionspaus e [min] |
|---|---|---|---|---|---|
| 2401 | SIEMENS | 7 | 10:20 | 00:05 | 0 |
| 2402 | INVENTION | 7 | 10:25 | 00:07 | 3 |
| 2403 | REPORT | 5 | 10:35 | 00:03 | 22 |
| 2404 | MUNICH | 5 | 11:00 | 00:03 | 57 |
| 2405 | BERLIN | 7 | 12:00 | 00:05 | |

Wie sich aus der obigen Tabelle ergibt, kann sich die (maximale) Anzahl von Chips pro Spalte eines Buchstabens unterscheiden. In Fig. 3 ist dabei ein Szenario gezeigt, bei dem fünf Chips pro Spalte verwendet werden. Durch Austausch der Chips durch kleinere Chips können auch Buchstaben mit sieben Chips pro Spalte generiert werden.

Im Folgenden wird ein energieeffizientes Schalten von Modulen an zwei Stellen in der Automatisierungsanlage der Fig. 3 beschrieben. Zum einen wird das Modul MO4 betrachtet, dessen Transportband B4 sich nur dann bewegen muss, wenn die Chips von dem Transportband B3 nach Anzeige ausgegeben werden. Mit anderen Worten besteht die Möglichkeit, dass das Transportband zur Energieeinsparung temporär abgeschaltet wird. Zum anderen müssen alle Module MO1 bis MO4 nur dann aktiv sein, wenn ein entsprechender Job gemäß der obigen Tabelle aktiv ist. Wenn eine ausreichend lange Unterbrechungszeit zwischen Jobs gemäß der obigen Tabelle besteht, können alle Module abgeschaltet bzw. in einen energiesparenden Zustand geschaltet werden.

Zunächst wird eine Steuerung der Anlage aus Fig. 3 im Falle von Produktionsstopps bzw. Produktionspausen erläutert, die sich aus obiger Tabelle ergeben. Der zeitliche Ablauf der Jobs aus obiger Tabelle stammt dabei aus der Logik OSC gemäß Fig. 1, wohingegen die Logik OSD aus Fig. 1 die Zeitspannen entsprechender Produktionsstopps (rechte Spalte der Tabelle) ermittelt.

Wie sich aus obiger Tabelle ergibt, werden zwischen den Jobs 2402 und 2403 die Anzahl der Chips pro Spalte geändert, was mit einem Austausch von Chips verbunden ist, der drei Minuten in Anspruch nimmt. In dieser Zeitspanne kann die gesamte Automatisierungsanlage abgeschaltet werden, da überhaupt keine "Produktion" in dem Sinne stattfindet, dass Worte über das Transportband B3 wiedergegeben werden. Das entsprechende (zweite) Informationssignal über diese Produktionspause wird gemäß Fig. 1 über die Schnittstellt IF an das Energie-Steuersystem EC gegeben, welches mittels der Logik SSC und SSE eine energieoptimale Schaltsequenz ermittelt, welche entsprechende Zeitvorgaben in der Ausführung der Jobs berücksichtigt, jedoch versucht, die Anlage mit möglichst großer Energieeinsparung zu betreiben. Für den soeben beschriebenen Produktionsstopp von drei Minuten werden dabei alle vier Module MO1 bis MO4 komplett abgeschaltet.

Nachfolgend wird ferner ein energieeffizientes Abschalten von Komponenten der Automatisierungsanlage aus dem laufenden Prozess der Anlage beschrieben, wobei dieses Abschalten basierend auf ersten Informationssignalen erfolgt, die von der Prozess-Steuereinheit PRC an das Energie-Steuersystem EC gegeben werden. Es wird dabei die Steuerung des Moduls MO4 mit dem Transportband B4 betrachtet. Wie bereits oben erwähnt, muss das Transportband B4 nur dann aktiv sein, wenn Chips tatsächlich vom Transportband B3 ausgegeben werden. Wenn sich einige Chips auf dem Transportband B3 befinden, besteht eine hohe Wahrscheinlichkeit, dass auch Chips hin zu dem Transportband B4 transportiert werden. Dabei wird über eine ansteigende Flanke der Lichtschranke LB3 das Vorhandensein von Chips detektiert, welche über den Spalten-Verschiebemechanismus CP auf das Transportband B3 bewegt werden.

Gemäß der Architektur der Fig. 1 wird das Signal der ansteigenden Flanke der Lichtschranke LB3 über die Prozess-Steuereinheit PRC an das Energie-Steuersystem EC gegeben, welches dieses Signal als Eingabe zur Berechnung der Schaltsequenzen nutzt. Dabei wird bei Vorliegen dieses Signals sowohl das Transportband B3 des Moduls MO3 als auch das Transportband B4 des Moduls MO4 angeschaltet. Die Zeitspanne, wie lange die entsprechenden Module angeschaltet bleiben, ist abhängig von der aktuellen Situation, z.B. davon, wie viele Chips bereits auf dem Transportband B3 vorhanden sind. Die Logik SSC berechnet die entsprechende Zeitspanne, in der die Module MO3 und MO4 angeschaltet bleiben, gemäß der aktuellen Situation.

Fig. 4 zeigt ein Zeitablaufdiagramm, welches die soeben beschriebene Aktivierung bzw. Deaktivierung der Module MO3 und MO4 nochmals verdeutlicht. Dabei entspricht die vertikale Richtung von oben nach unten wiederum dem Fortschreiten der Zeit und den Komponenten zugeordneten Balken stellen Zeitspannen dar, in denen die Komponenten aktiv sind. In dem Diagramm der Fig. 4 sind neben den einzelnen Modulen MO1 bis MO4 auch deren zugeordnete Gerätesteuereinheiten DC1 bis DC4 spezifiziert. Ferner ist die Prozess-Steuereinheit PRC sowie das Energie-Steuersystem EC dargestellt. Darüber hinaus bezeichnet "LB 1 RE" eine ansteigende Flanke der Lichtschranke LB1 und "LB 1 FE" eine absteigende Flanke der Lichtschranke LB1. Analog bezeichnet "LB 3 RE" eine ansteigende Flanke der Lichtschranke LB3.

Das Diagramm der Fig. 4 zeigt alle aktiven Perioden der einzelnen Module und ihre Interaktion mit den anderen Modulen. Es wird dabei die Anzeige des Buchstabens "C" beschrieben. Dieser Buchstabe setzt sich aus drei aufeinander folgenden Spalten zusammen, wobei die erste Spalte fünf Chips, die zweite Spalte zwei Chips und die dritte Spalte ebenfalls zwei Chips enthält. Die Chips der ersten Spalte sind in Fig. 4 mit C11, C12, C13, C14 und C15 bezeichnet. Die Chips der zweiten Spalte sind demgegenüber mit C21 und C22 bezeichnet. Entsprechend werden auch die Chips der dritten Spalte mit C31 und C32 bezeichnet. Ferner ist dem Zeitablauf der Fig. 4 auch noch der Chip C11' des nächsten wiederzugebenden Buchstabens angedeutet.

Gemäß dem Szenario der Fig. 4 ist zunächst das Modul MO1 aktiv. Schließlich wird durch die Lichtschranke LB1 eine ansteigende Flanke aufgrund des Transports des Chips C11 zum Ende des Transportband B1 ausgegeben. Als Folge startet das Modul MO2, wohingegen das Modul MO1 gestoppt wird. Nach der Übergabe des Chips C11 an das Modul MO2 wird durch die Lichtschranke LB1 eine absteigende Flanke generiert. Dies hat zur Folge, dass das Modul MO1 zum Transport des nächsten Chips C12 wieder aktiviert wird. Dieses Vorgehen wird fortgesetzt, bis die erste Spalte des Buchstabens C an das Transportband B2 übergeben ist. Dabei ist in Fig. 2 ferner durch "LB 1" der Fall angedeutet, dass der Chip C13 unmittelbar auf den Chip C12 folgt und somit auf die durch den Chip C12 generierte ansteigende Flanke "LB 1 RE" erst wieder eine absteigende Flanke "LB 1 FE" folgt, wenn Chip C13 die Lichtschranke LB1 passiert hat.

Schließlich tritt in dem Ablaufdiagramm der Fig. 1 eine ansteigende Flanke "LB 3 RE" an der Lichtschranke LB3 auf, welche aufgrund des Schiebens der ersten Spalte des Buchstabens "C" auf das Transportband B3 durch den Mechanismus CP verursacht wird. Diese ansteigende Flanke führt dazu, dass die Prozess-Steuereinheit PRC eine entsprechende Information IN1 an das Energie-Steuersystem EC gibt, welches daraufhin sowohl das Modul MO3 als auch das Modul MO4 aktiviert, wie durch die Pfeile AS und AS' angedeutet ist. Dieses Szenario wiederholt sich entsprechend bei der Übergabe der zweiten Spalte und der dritten Spalte des Buchstabens C, wie sich aus der Darstellung der Fig. 4 erkennen lässt.

Wie bereits erwähnt, wird die Zeitspanne der Aktivierung der Module MO3 und MO4 gemäß der aktuellen Situation berechnet. Anschließend werden die Module wieder abgeschaltet. In dem Szenario der Fig. 2 wird das Modul MO3 bei Deaktivierung in einem Standby-Zustand geschaltet, da es bei der Übergabe von Chips durch den Mechanismus CP wieder schnell angeschaltet werden muss. Demgegenüber kann das Modul MO4 bei seiner Deaktivierung in den ausgeschalteten Zustand geschaltet werden, da die Übergabe der Chips von dem Transportband B3 zu dem Transportband B4 nicht zeitkritisch ist.

### Literaturverzeichnis:

[1] EP 2 149 828 B1
[2] WO 2013/044964 A1
[3] WO 2013/143584 A1
[4] S. Mechs, J. P. Müller, S. Lamparter, and J. Peschke, "Networked priced timed automata for energy-efficient factory automation," in American Control Conference, Montreal, Canada, 2012, Seiten 5310-5317
[5] S. Mechs, S. Lamparter, and J. P. Müller, "On evaluation of alternative switching strategies for energy-efficient operation of modular factory automation systems," in Proc. of the 17th IEEE Conference on Emerging Technologies and Factory Automation, Krakow, Poland, 2012, Seite 1-8.
[6] S. Mechs, S. Grimm, D. Beyer, S. Lamparter, "Evaluation of Prediction Accuracy for Energy-efficient Switching of Automation Facilities", 39th Annual Conference of the IEEE Industrial Electronics Society (IECON), 2013

## Patentansprüche

1. Vorrichtung zum Betrieb einer Automatisierungsanlage, umfassend
- ein Automatisierungs-Steuersystem (ASC), das eine Prozess-Steuereinheit (PRC) zur Steuerung der durch die Automatisierungsanlage durchgeführten Prozesse umfasst, wobei die Prozess-Steuereinheit (PRC) im Rahmen der Steuerung auf mehrere Gerätesteuereinheiten (DC1, ..., DC4) zugreift, wobei eine jeweilige Gerätesteuereinheit (DC1, ..., DC4) einem jeweiligen Teilsystem (MO1, ..., MO4) der Automatisierungsanlage zugeordnet ist und zu dem Teilsystem (MO1, ..., MO4) gehörige Geräte steuert;
- ein übergeordnetes Steuersystem (OP), welches Zugriff auf das Automatisierungs-Steuersystem (ASC) zur Beeinflussung des Betriebs der Automatisierungsanlage hat;
- ein Energie-Steuersystem (EC) zur Ermittlung und Ausführung von Schaltsequenzen (SWS), wobei das Energie-Steuersystem (EC) im Rahmen der Ausführung einer Schaltsequenz (SWS) Schaltbefehle an das Automatisierungs-Steuersystem (ASC) gibt, wodurch Geräte der Teilsysteme (MO1, ..., MO4) zumindest zeitweise in Betriebszustände mit reduziertem Energieverbrauch geschaltet werden;
- eine Schnittstelle (IF) zur Ausgabe von ersten Informationssignalen (IN1) von der Prozess-Steuereinheit (PRC) an das Energie-Steuersystem (EC), wobei die ersten Informationssignale (IN1) ein oder mehrere Teilsysteme (MO1, ..., MO4) und/oder Geräte davon spezifizieren, die von den durch die Automatisierungsanlage durchgeführten Prozessen zumindest zeitweise nicht benötigt werden;
- eine Schnittstelle (IF) zur Ausgabe von zweiten Informationssignalen (IN2) von dem übergeordneten Steuersystem (OP) an das Energie-Steuersystem (EC), wobei die zweiten Informationssignale (IN2) zumindest einen anstehenden Betriebstopp von einem oder mehreren Teilsystemen (MO1, ..., MO4) und/oder Geräten davon spezifizieren;
- wobei das Energie-Steuersystem (EC) derart ausgestaltet ist, dass es die Schaltsequenzen (SWS) basierend auf den ersten und zweiten Informationssignalen (IN1, IN2) berechnet und ausführt.

2. Vorrichtung nach Anspruch 1, wobei das Automatisierungs-Steuersystem (ASC) zur Steuerung der Automatisierungsanlage auf der Steuerungsebene und/oder der Prozessleitebene gemäß der Automatisierungspyramide vorgesehen ist.

3. Vorrichtung nach Anspruch 1 oder 2, wobei das übergeordnete Steuersystem (OP) zur Beeinflussung des Betriebs der Automatisierungsanlage oberhalb der Prozessleitebne gemäß der Automatisierungspyramide vorgesehen ist, insbesondere in der Betriebsleitebene.

4. Vorrichtung nach einem der vorhergehenden Ansprüche, wobei das übergeordnete Steuersystem (OP) ein Betriebsplanungssystem ist, insbesondere ein Produktionsleitsystem, wobei das Betriebsplanungssystem derart ausgestaltet ist, dass es den zeitlichen Betriebsablauf (OS) der Automatisierungsanlage erstellt und in diesem zeitlichen Betriebsablauf (OS) enthaltene Betriebsstopps bestimmt.

5. Vorrichtung nach Anspruch 4, wobei das Betriebsplanungssystem eine separate Erstellungs-Logik (OSC) zur Erstellung des zeitlichen Betriebsablaufs (OS) und eine separate Bestimmungs-Logik (OSD) zur Bestimmung der in diesem zeitlichen Betriebsablauf (OS) enthaltenen Betriebsstopps umfasst, wobei die Bestimmungs-Logik (OSD) zur Bestimmung der Betriebsstopps auf die Erstellungs-Logik (OSC) zugreift.

6. Vorrichtung nach einem der vorhergehenden Ansprüche, wobei das Energie-Steuersystem (EC) derart ausgestaltet ist, dass es die Schaltsequenzen (SWS) basierend auf einem Energiezustandsmodell (ESM) ermittelt, gemäß dem die Geräte der Teilsysteme (MO1, ..., MO4) basierend auf dem Kriterium eines möglichst niedrigen Energieverbrauchs eines oder mehrerer Teile der Automatisierungsanlage und insbesondere der gesamten Automatisierungsanlage und/oder dem Kriterium eines geringen Verschleißes eines oder mehrerer Teile der Automatisierungsanlage in Betriebszustände mit reduziertem Energieverbrauch geschaltet werden.

7. Vorrichtung nach einem der vorhergehenden Ansprüche, wobei eine gemeinsame Schnittstelle (IF) für das übergeordnete Steuersystem (OP) und die Prozess-Steuereinheit (PRC) vorgesehen ist, um hierüber die ersten und zweiten Informationssignale (IN1, IN2) an das Energie-Steuersystem (EC) auszugeben.

8. Vorrichtung nach einem der vorhergehenden Ansprüche, wobei das Energie-Steuersystem (EC) eine separate Berechnungs-Logik (SSC) zur Berechnung von Schaltsequenzen (SWS) und eine separate Ausführungs-Logik (SSE) zur Ausführung von Schaltsequenzen (SWS) aufweist, wobei die Berechnungs-Logik (SSC) zur Initialisierung der Ausführung einer berechneten Schaltsequenz (SWS) auf die Ausführungs-Logik (SSE) zugreift.

9. Vorrichtung nach einem der vorhergehenden Ansprüche, wobei in dem Automatisierungs-Steuersystem (ASC) für jedes Teilsystem (MO1, ..., MO4) eine Schaltsteuereinheit (SC1, ..., SC4) vorgesehen ist, welche Schaltbefehle des Energie-Steuersystems (EC) in durch die Gerätesteuereinheit (DC1, ..., DC4) des jeweiligen Teilsystems (MO1, ..., MO4) verarbeitbare Befehle umsetzt.

10. Vorrichtung nach einem der vorhergehenden Ansprüche, wobei die Vorrichtung zum Betrieb einer Automatisierungsanlage in der Form einer Anlage zur Herstellung von Gütern oder Produkten oder einer logistischen Verteilanlage vorgesehen ist.

11. Automatisierungsanlage, welche eine Vorrichtung nach einem der vorhergehende Ansprüche umfasst.

12. Verfahren zum Betrieb einer Automatisierungsanlage, bei dem
- eine Prozess-Steuereinheit (PRC) in einem Automatisierungs-Steuersystem (ASC) auf mehrere Gerätesteuereinheiten (DC1, ..., DC4) zugreift, wobei eine jeweilige Gerätesteuereinheit (DC1, ..., DC4) einem jeweiligen Teilsystem (MO1, ..., MO4) der Automatisierungsanlage zugeordnet ist und zu dem Teilsystem (MO1, ..., MO4) gehörige Geräte steuert;
- ein übergeordnetes Steuersystem (OP) auf das Automatisierungs-Steuersystem (ASC) zur Beeinflussung des Betriebs der Automatisierungsanlage zugreift;
- ein Energie-Steuersystem (EC) Schaltsequenzen (SWS) ermittelt und ausführt, wobei das Energie-Steuersystem (EC) im Rahmen der Ausführung einer Schaltsequenz (SWS) Schaltbefehle an das Automatisierungs-Steuersystem (ASC) gibt, wodurch Geräte der Teilsysteme (MO1, ..., MO4) zumindest zeitweise in Betriebszustände mit reduziertem Energieverbrauch geschaltet werden;
- erste Informationssignale (IN1) über eine Schnittstelle (IF) von der Prozess-Steuereinheit (PRC) an das Energie-Steuersystem (EC) ausgegeben werden, wobei die ersten Informationssignale (IN1) ein oder mehrere Teilsysteme (MO1, ..., MO4) und/oder Geräte davon spezifizieren, die zumindest zeitweise von den durch die Automatisierungsanlage durchgeführten Prozessen nicht benötigt werden;
- zweite Informationssignale (IN2) über eine Schnittstelle (IF) von dem übergeordneten Steuersystem (OP) an das Energie-Steuersystem (EC) ausgegeben werden, wobei die zweiten Informationssignale (IN2) zumindest einen anstehenden Betriebstopp von einem oder mehreren Teilsystemen (MO1, ..., MO4) und/oder Geräten davon spezifizieren;
- das Energie-Steuersystem (EC) die Schaltsequenzen (SWS) basierend auf den ersten und zweiten Informationssignalen (IN1, IN2) berechnet und ausführt.

13. Verfahren nach Anspruch 12, wobei das Verfahren derart ausgestaltet ist, dass die Automatisierungsanlage mit einer Vorrichtung nach einem der Ansprüche 2 bis 11 betrieben wird.

## Claims

1. Apparatus for operating an automation installation, comprising
- an automation control system (ASC) comprising a process control unit (PRC) for controlling the processes carried out by the automation installation, wherein, in the course of control, the process control unit (PRC) accesses a plurality of device control units (DC1, ..., DC4), wherein a respective device control unit (DC1, ..., DC4) is assigned to a respective subsystem (MO1, ..., MO4) of the automation installation and controls devices belonging to the subsystem (MO1, ..., MO4);
- a superordinate control system (OP) which has access to the automation control system (ASC) in order to influence the operation of the automation installation;
- an energy control system (EC) for determining and executing switching sequences (SWS), wherein, in the course of executing a switching sequence (SWS), the energy control system (EC) gives switching commands to the automation control system (ASC), as a result of which devices of the subsystems (MO1, ..., MO4) are at least temporarily switched to operating states with a reduced energy consumption;
- an interface (IF) for outputting first information signals (IN1) from the process control unit (PRC) to the energy control system (EC), wherein the first information signals (IN1) specify one or more subsystems (MO1, ..., MO4) and/or devices of the latter which are at least temporarily not required by the processes carried out by the automation installation;
- an interface (IF) for outputting second information signals (IN2) from the superordinate control system (OP) to the energy control system (EC), wherein the second information signals (IN2) specify at least one pending stoppage of operation of one or more subsystems (MO1, ..., MO4) and/or devices of the latter;
- wherein the energy control system (EC) is configured in such a manner that it calculates and executes the switching sequences (SWS) on the basis of the first and second information signals (IN1, IN2).

2. Apparatus according to Claim 1, wherein the automation control system (ASC) is provided for the purpose of controlling the automation installation on the control level and/or the process control level according to the automation pyramid.

3. Apparatus according to Claim 1 or 2, wherein the superordinate control system (OP) is provided for the purpose of influencing the operation of the automation installation above the process control level according to the automation made, in particular on the operations management level.

4. Apparatus according to one of the preceding claims, wherein the superordinate control system (OP) is an operational planning system, in particular a production control system, wherein the operational planning system is configured in such a manner that it creates the temporal operating sequence (OS) of the automation installation and determines stoppages of operation contained in this temporal operating sequence (OS).

5. Apparatus according to Claim 4, wherein the operational planning system comprises a separate creation logic unit (OSC) for creating the temporal operating sequence (OS) and a separate determination logic unit (OSD) for determining the stoppages of operation contained in this temporal operating sequence (OS), wherein the determination logic unit (OSD) accesses the creation logic unit (OSC) for the purpose of determining the stoppages of operation.

6. Apparatus according to one of the preceding claims, wherein the energy control system (EC) is configured in such a manner that it determines the switching sequences (SWS) on the basis of an energy state model (ESM), according to which the devices of the subsystems (MO1, ..., MO4) are switched to operating states with a reduced energy consumption on the basis of the criterion of the lowest possible energy consumption of one or more parts of the automation installation and, in particular, of the entire automation installation and/or the criterion of low wear of one or more parts of the automation installation.

7. Apparatus according to one of the preceding claims, wherein a common interface (IF) is provided for the superordinate control system (OP) and the process control unit (PRC) in order to output the first and second information signals (IN1, IN2) to the energy control system (EC) via said interface.

8. Apparatus according to one of the preceding claims, wherein the energy control system (EC) has a separate calculation logic unit (SSC) for calculating switching sequences (SWS) and a separate execution logic unit (SSE) for executing switching sequences (SWS), wherein the calculation logic unit (SSC) accesses the execution logic unit (SSE) in order to initialize the execution of a calculated switching sequence (SWS).

9. Apparatus according to one of the preceding claims, wherein a switching control unit (SC1, ..., SC4) is provided in the automation control system (ASC) for each subsystem (MO1, ..., MO4) and converts switching commands from the energy control system (EC) into commands which can be processed by the device control unit (DC1, ..., DC4) of the respective subsystem (MO1, ..., MO4).

10. Apparatus according to one of the preceding claims, wherein the apparatus is provided for the purpose of operating an automation installation in the form of an installation for producing goods or products or in the form of a logistic distribution installation.

11. Automation installation which comprises an apparatus according to one of the preceding claims.

12. Method for operating an automation installation, in which
- a process control unit (PRC) in an automation control system (ASC) accesses a plurality of device control units (DC1, ..., DC4), wherein a respective device control unit (DC1, ..., DC4) is assigned to a respective subsystem (MO1, ..., MO4) of the automation installation and controls devices belonging to the subsystem (MO1, ..., MO4);
- a superordinate control system (OP) accesses the automation control system (ASC) in order to influence the operation of the automation installation;
- an energy control system (EC) determines and executes switching sequences (SWS), wherein, in the course of executing a switching sequence (SWS), the energy control system (EC) gives switching commands to the automation control system (ASC), as a result of which devices of the subsystems (MO1, ..., MO4) are at least temporarily switched to operating states with a reduced energy consumption;
- first information signals (IN1) are output from the process control unit (PRC) to the energy control system (EC) via an interface (IF), wherein the first information signals (IN1) specify one or more subsystems (MO1, ..., MO4) and/or devices of the latter which are at least temporarily not required by the processes carried out by the automation installation;
- second information signals (IN2) are output from the superordinate control system (OP) to the energy control system (EC) via an interface (IF), wherein the second information signals (IN2) specify at least one pending stoppage of operation of one or more subsystems (MO1, ..., MO4) and/or devices of the latter;
- the energy control system (EC) calculates and executes the switching sequences (SWS) on the basis of the first and second information signals (IN1, IN2).

13. Method according to Claim 12, wherein the method is configured in such a manner that the automation installation is operated using an apparatus according to one of Claims 2 to 11.

## Revendications

1. Dispositif pour faire fonctionner une installation d'automatisation, comprenant
- un système (ASC) de commande d'automatisation, qui comprend une unité (PRC) de commande de processus pour la commande des processus effectués par l'installation d'automatisation, l'unité (PRC) de commande de processus accédant dans le cadre de la commande à plusieurs unités (DC1, ..., DC4) de commande d'appareil, dans lequel une unité (DC1, ..., DC4) de commande d'appareil respective est associée à un système (MO1, ..., MO4) partiel respectif de l'installation d'automatisation et commande des appareils appartenant au système (MO1, ..., MO4) partiel ;
- un système (OP) de commande supérieur hiérarchiquement, qui a accès au système (ASC) de commande d'automatisation pour influencer le fonctionnement de l'installation d'automatisation ;
- un système (EC) de commande d'énergie pour la détermination et l'exécution de séquences (SWS) de commutation, le système (EC) de commande d'énergie donnant, dans le cadre de l'exécution d'une séquence (SWS) de commutation des instructions de commutation au système (ASC) de commande d'automatisation, grâce à quoi des appareils des systèmes (MO1, ..., MO4) partiels sont mis au moins de temps en temps dans des états de fonctionnement à consommation d'énergie réduite ;
- une interface (IF) pour l'envoi de premiers signaux (IN1) d'information de l'unité (PRC) de commande de processus au système (EC) de commande d'énergie, dans lequel les premiers signaux (IN1) d'information spécifient un ou plusieurs systèmes (MO1, ..., MO4) partiels et/ou appareils, qui ne sont pas nécessaires au moins de temps au temps aux processus effectués par l'installation d'automatisation ;
- une interface (IF) pour l'envoi de deuxièmes signaux (IN2) d'information du système (OP) de commande supérieur hiérarchiquement au système (EC) de commande d'énergie, dans lequel les deuxièmes signaux (IN2) d'information spécifient au moins un arrêt de fonctionnement existant d'un ou de plusieurs systèmes (MO1, ..., MO4) partiels et/ou d'appareils,
- dans lequel le système (EC) de commande d'énergie est constitué de manière à calculer et à effectuer les séquences (SWS) de commutation sur la base des premiers et deuxièmes signaux (IN1, IN2) d'information.

2. Dispositif suivant la revendication 1, dans lequel le système (ASC) de commande d'automatisation est prévu pour la commande de l'installation d'automatisation sur le plan de commande et/ou le plan de conduite de processus suivant la pyramide d'automatisation.

3. Dispositif suivant la revendication 1 ou 2, dans lequel le système (OP) de commande supérieur hiérarchiquement est prévu pour influencer le fonctionnement de l'installation d'automatisation au-dessus du plan de conduite de processus suivant la pyramide d'automatisation, notamment dans le plan de conduite du fonctionnement.

4. Dispositif suivant l'une des revendications précédentes, dans lequel le système (OP) de commande supérieur hiérarchiquement est un système de planification du fonctionnement, notamment un système de conduite de la production, dans lequel le système de planification du fonctionnement est conformé de manière à établir le déroulement (OS) du fonctionnement dans le temps de l'installation d'automatisation et à y déterminer des arrêts de fonctionnement dans le déroulement (OS) dans le temps du fonctionnement.

5. Dispositif suivant la revendication 4, dans lequel le système de planification du fonctionnement comprend une logique (OSC) d'établissement pour l'établissement du déroulement (OS) dans le temps du fonctionnement et une logique (OSD) distincte de détermination pour la détermination des arrêts de fonctionnement dans le déroulement (OS) dans le temps du fonctionnement, la logique (OSD) de détermination accédant à la logique (OSC) d'établissement pour la détermination des arrêts du fonctionnement.

6. Dispositif suivant l'une des revendications précédentes, dans lequel le système (EC) de commande d'énergie est conformé de manière à déterminer les séquences (SWS) de commutation sur la base d'un modèle (ESM) d'état d'énergie suivant lequel les appareils des systèmes (MO1, ..., MO4) partiels sont, sur la base de critères d'une consommation d'énergie aussi petite que possible d'une ou de plusieurs parties de l'installation d'automatisation et notamment de toute l'installation d'automatisation et/ou du critère d'une ou de plusieurs parties de l'installation d'automatisation, mis dans l'état de fonctionnement à consommation d'énergie réduite.

7. Dispositif suivant l'une des revendications précédentes, dans lequel il est prévu une interface (IM) commune pour le système (OP) de commande supérieur hiérarchiquement et pour l'unité (PRC) de commande de processus pour y envoyer les premiers et deuxièmes signaux (IN1, IN2) d'information au système (EC) de commande d'énergie.

8. Dispositif suivant l'une des revendications précédentes, dans lequel le système (EC) de commande d'énergie a une logique (SSC) de calcul distincte pour le calcul de séquences (SWS) de commutation et une logique (SSE) d'exécution distincte pour l'exécution de séquences (SWS) de commutation, la logique (SSC) de calcul accédant à la logique (SSE) d'exécution pour l'initialisation de l'exécution d'une séquence (SWS) de commutation calculée.

9. Dispositif suivant l'une des revendications précédentes, dans lequel il est prévu dans le système (ASC) de commande d'automatisation pour chaque système (MO1, ..., MO4) partiel une unité (SC1, ..., SC4) de commande de commutation, qui transforme des instructions de commutation du système (EC) de commande d'énergie en des instructions pouvant être traitées par l'unité (DC1, ..., DC4) de commande d'appareil du système (MO1, ..., MO4) partiel respectif.

10. Dispositif suivant l'une des revendications précédentes, dans lequel le dispositif est prévu pour faire fonctionner une installation d'automatisation sous la forme d'une installation de production de marchandises ou de produits ou d'une installation logistique de distribution.

11. Installation d'automatisation, qui comprend un dispositif suivant l'une des revendications précédentes.

12. Procédé pour faire fonctionner une installation d'automatisation, dans lequel
- une unité (PRC) de commande de processus d'un système (ASC) de commande d'automatisation accède à plusieurs unités (DC1, ..., DC4) de commande d'appareil, dans lequel une unité (DC1, ..., DC4) de commande d'appareil respective est associée à un système (MO1, ..., MO4) partiel respectif de l'installation d'automatisation et commande des appareils appartenant au système (MO1, ..., MO4) partiel,
- un système (OP) de commande supérieur hiérarchiquement accède au système (ASC) de commande d'automatisation pour influencer le fonctionnement de l'installation d'automatisation ;
- un système (EC) de commande d'énergie détermine et exécute des séquences (SWS) de commutation, dans lequel le système (EC) de commande d'énergie donne, dans le cadre de l'exécution d'une séquence (SWS) de commutation, des instructions de commutation au système (ASC) de commande d'automatisation, grâce à quoi des appareils des systèmes (MO1, ..., MO4) partiels sont au moins de temps en temps mis dans des états de fonctionnement à consommation d'énergie réduite ;
- des premiers signaux (IN1) d'information sont envoyés par une interface (IF) de l'unité (PRC) de commande de processus au système (EC) de commande d'énergie, dans lequel les premiers signaux (IN1) d'information spécifient un ou plusieurs systèmes (MO1, ..., MO4) partiels et/ou appareils qui n'ont pas besoin au moins de temps en temps des processus effectués par l'installation d'automatisation ;
- des deuxièmes signaux (IN2) d'information sont envoyés par l'interface (IF) du système (OP) de commande supérieur hiérarchiquement au système (EC) de commande d'énergie, dans lequel les deuxièmes signaux (IN2) d'information spécifient au moins un arrêt du fonctionnement présent d'un ou de plusieurs systèmes (MO1, ..., MO4) partiels et/ou d'appareils ;
- le système (EC) de commande d'énergie calcule et exécute les séquences (SWS) de commutation sur la base des premiers et des deuxièmes signaux (IN1, IN2) d'information.

13. Procédé suivant la revendication 12, dans lequel le procédé est conformé de manière à ce que l'installation d'automatisation fonctionne avec un dispositif suivant l'une des revendications 2 à 11.
